# EUROPÄISCHE PATENTSCHRIFT

(11) **EP 4 090 854 B1**
(45) Veröffentlichungstag und Bekanntmachung des Hinweises auf die Patenterteilung: **05.06.2024**
(21) Anmeldenummer: 20838423.0
(22) Anmeldetag: 17.12.2020
(51) Int. Cl.: F16B 7/18, B25B 13/06, B25B 13/50, B25B 23/12, F16B 13/02, F16B 13/04

(54) **WIDERLAGERHÜLSE**
COUNTER-BEARING SLEEVE
MANCHON DE CONTRE-PALIER

(30) Priorität: 14.01.2020 DE 102020200390
(43) Veröffentlichungstag der Anmeldung: 23.11.2022
(73) Patentinhaber: Rixen, Wolfgang, 42699 Solingen (DE); Pies, Gerrit, 42699 Solingen (DE)
(72) Erfinder: HAAS, Kevin, 40229 Düsseldorf (DE); SCHMID, Marc, 40724 Hilden (DE); GABLER, Guido, 42651 Solingen (DE); BURZYNSKI, Lukasz, 42651 Solingen (DE)
(74) Vertreter: BRP Renaud & Partner mbB Rechtsanwälte Patentanwälte Steuerberater
(86) Internationale Anmeldenummer: PCT/EP2020/086806
(87) Internationale Veröffentlichungsnummer: WO 2021/144112

(56) Entgegenhaltungen:
- DE-C1- 4 016 320
- DE-U1-202004 017 885
- DE-U1-202014 104 524
- US-A- 3 086 414
- US-A- 4 775 259
- US-B1- 6 668 689

## Beschreibung

Die vorliegende Erfindung betrifft eine Widerlagerhülse für ein zumindest eine hinterschnittene Längsnut aufweisendes Profilrohr, gemäß dem Oberbegriff des Anspruchs 1. Die Erfindung betrifft außerdem einen Quickverbinder mit einer derartigen Widerlagerhülse sowie eine Querverbindung mit einem solchen Quickverbinder. Darüber hinaus betrifft die Erfindung ein Herstellungsverfahren einer Querverbindung mit einem derartigen Querverbinder.

Aus der DE 20 2004 017 885 U1 ist eine gattungsgemäße Widerlagerhülse für ein zumindest eine hinterschnittene Längsnut aufweisendes Profilrohr bekannt.

Aus der EP 0 458 069 A1 ist eine Querverbindung von zwei rechtwinklig aufeinander stehenden, mit hinterschnittenen Längsnuten versehenen Profilrohren bekannt, die eine an ihrem einen Ende einen Kopf aufweisende Verbindungsschraube besitzt, die parallel zur Symmetrieachse eines längs verlaufenden Profilrohrs in einer hinterschnittenen Längsnut desselben angeordnet ist. Mit ihrem anderen Ende greift sie in eine in einer Längsnut des quer verlaufenden Profilrohrs angeordnete Schraubenmutter, beispielsweise einen Nutenstein, ein, wobei das Widerlagerstück axial unverschieblich in der hinterschnittenen Längsnut des Profilrohrs eingedreht ist.

Aus der EP 1 574 725 A1 ist eine Profilverbindung mit zwei miteinander zu verbindenden Profilrohren bekannt, die jeweils mindestens eine längs verlaufende und hinterschnittene Profilnut besitzen. In mindestens eine Profilnut des ersten Profilrohrs ist dabei eine Verbindungsschraube mit einem Schraubenkopf und einem Schraubenschaft einführbar, wobei in der Profilnut zugleich eine Befestigungshülse mit einer parallel zur Profilnut verlaufenden Durchtrittsbohrung einschraubbar ist. Die Verbindungsschraube durchgreift mit ihrem Schraubenschaft die Befestigungshülse und ist in ein entsprechendes Gegenstück, beispielsweise einen Nutenstein, der in einer Längsnut des quer dazu angeordneten Profilrohrs angeordnet ist, eingeschraubt. Hierdurch soll eine verbesserte Querverbindung erreicht werden.

Generell weist die Verbindungstechnik von Aluminiumprofilrohren trotz vielfältiger Weiterentwicklungen immer noch den Nachteil auf, dass sie zeitintensiv in der Montage und damit teuer ist. Daneben erfordert eine Montage beispielsweise einer Querverbindung auch eine ausgeprägte Montagefähigkeit des die Verbindung herstellenden Werkers, was die Montage allgemein vergleichsweise schnell unattraktiv macht, was wiederum zu einer Demotivation und damit verbundenen Montagefehlern führen kann.

Wird bei gängigen Querverbindungen beispielsweise eine Widerlagerhülse verwandt, so ist deren Montage zusätzlich äußerst kraftaufwändig und ohne entsprechenden Akkuschrauber nur schwer möglich. Zugleich kann bei einer nicht ausreichend eingeschraubten Widerlagerhülse diese auch noch zu weit hervorstehen, wodurch kein formschlüssiges Anliegen der beiden quer miteinander zu verbindenden Profilrohre bewirkt werden kann und ein erneutes, weiteres Eindrehen der Widerlagerhülse erforderlich ist. Oftmals ist zudem noch eine spanende Vorbearbeitung erforderlich, was ebenfalls teuer ist. Zudem ist auch eine 180° fluchtende Montage von zwei horizontal angeordneten Profilrohren an einem vertikalen Profilrohr nicht möglich und es kann auch zu einem Verkanten bei mehreren derartigen Verbindern kommen.

Die vorliegende Erfindung beschäftigt sich daher mit dem Problem, für eine Widerlagerhülse der gattungsgemäßen Art eine verbesserte oder zumindest eine alternative Ausführungsform anzugeben, die insbesondere eine Montage von Querverbindungen deutlich erleichtert.

Dieses Problem wird erfindungsgemäß durch den Gegenstand der unabhängigen Ansprüche gelöst. Vorteilhafte Ausführungsformen sind Gegenstand der abhängigen Ansprüche.

Die vorliegende Erfindung beruht auf dem allgemeinen Gedanken, erstmals eine Widerlagerhülse, für beispielsweise einen Querverbinder, anzubieten, die vergleichsweise leicht über eine Art Bajonettverschluss axial unverschieblich in einer Längsnut eines Profilrohrs fixierbar ist. Die erfindungsgemäße Widerlagerhülse bietet dabei den großen Vorteil, dass diese nicht über einen durchgängigen Gewindegang mit mehreren Umdrehungen und damit äußerst kraftintensiv und unter dem Risiko der Aufweitung der Profilnut/Längsnut in dieselbe eingedreht werden muss, sondern einfach in diese eingeschoben werden kann und erst nach Erreichen ihrer axialen Endlage noch analog zu einem Bajonettverschluss verdreht wird, wobei dann entsprechende Schneidenkämme eines Befestigungsbereichs in Innenumfangskonturen (Nutengrund und Nutenflanken) der Längsnut einschneiden und die Widerlagerhülse fixieren. Die erfindungsgemäße Widerlagerhülse für mit Längsnuten versehenen Profilrohren besitzt eine sich entlang einer Axialrichtung erstreckende Durchgangsöffnung zum Durchführen einer Verbindungsschraube sowie erfindungsgemäß einen außenliegenden selbstschneidenden oder gewindeformenden Befestigungsbereich, der zumindest zwei, vorzugsweise drei, über den Umfang verteilte Befestigungsabschnitte aufweist. Diese Befestigungsabschnitte sind in Umfangsrichtung unterbrochen und vorzugsweise an einen Nutengrund bzw. Nutenflanken bzw. Nutenvorsprünge derart angepasst, dass die Widerlagerhülse zunächst in Axialrichtung berührungsfrei in die Längsnut des Profilrohrs eingeschoben werden kann und sich die Schneidenkämme erst bei einem Verdrehen der Widerlagerhülse in die jeweiligen Innenkonturen der Längsnut einschneiden. Jeder Befestigungsabschnitt besitzt zumindest zwei, vorzugsweise sogar drei oder mehr, in Axialrichtung benachbarte Schneidenkämme, es können aber auch acht oder zehn sein, die in Eindrehrichtung versetzt zueinander angeordnet sind, sodass bei einem Eindrehen der Widerlagerhülse in eine Längsnut eines Profilrohrs die Schneidenkämme nacheinander in einen Nutengrund und zumindest eine Nutenflanke, d. h. die Innenkonturen der Längsnut, einschneiden. Dies hat den großen Vorteil, dass im Unterschied zu bislang aus dem Stand der Technik bekannten Widerlagerhülsen nicht sämtliche Schneidenkämme gleichzeitig eingedreht werden müssen, sondern diese nacheinander in das Material der Längsnut einschneiden, wodurch das aufzubringende Eindrehmoment deutlich reduziert werden kann. Zudem kann auch das Risiko gesenkt werden, die Längsnut aufzuweiten. Von großem Vorteil bei einer derartigen Widerlagerhülse ist darüber hinaus, dass diese selbst in geschlossenen Nuten eingesetzt werden kann, was mit bislang aus dem Stand der Technik bekannten Widerlagerhülsen, mit vollständig umlaufendem Schneidgewinde, nicht oder nur schwer möglich war. Mit der erfindungsgemäßen Widerlagerhülse ist zudem ein zentriertes Anordnen derselben in der Längsnut möglich, da diese zunächst berührungsfrei und damit widerstandsfrei in die Längsnut eingeschoben und erst zur Fixierung analog zu einem Bajonettverschluss verdreht wird. Mit der erfindungsgemäßen Widerlagerhülse kann auch eine vergleichsweise hohe Auszugskraft in Axialrichtung erreicht werden, die beispielsweise über 12 kN liegt. Alles in allem kann mit der erfindungsgemäßen Widerlagerhülse die Montage derselben in einer Längsnut eines Profilrohrs und damit beispielsweise das Herstellen einer Querverbindung, deutlich vereinfacht, qualitativ verbessert und zugleich kostengünstiger gestaltet werden.

An einem Längsende der Widerlagerhülse kann noch zumindest ein Werkzeugeingriff, beispielsweise ein Freischliff und/oder ein Innenmehrkant, angeordnet sein, über welchen ein Drehmoment zum Eindrehen der Widerlagerhülse in die Längsnut aufgebracht werden kann. Zum Eindrehen der Widerlagerhülse in die Längsnut muss diese lediglich ca. 60°, maximal jedoch ca. 90°, verdreht werden, was selbstverständlich abhängig von der Anzahl der Schneidenkämme und deren in Umfangsrichtung versetzter Anordnung ist. Die einzelnen Schneidenkämme können dabei selbstverständlich in Umfangsrichtung auch bei 0°, 107° und 253° Umfangswinkel angeordnet sein, wodurch die Schneidenkämme gleichzeitig in die Nutenflanken und den Nutengrund einschneiden. Darüber hinaus kann ein Eindrehen der erfindungsgemäßen Widerlagerhülse in die jeweils zugehörige Längsnut mittels einfacher Werkzeuge, beispielsweise mittels eines Inbusschlüssels, eines Gabelschlüssels oder einer im Folgenden noch beschriebenen Steckschlüsselnuss erfolgen, je nachdem, ob der Werkzeugeingriff als Innenmehrkant bzw. als Freischliff ausgebildet ist.

Bei einer vorteilhaften Weiterbildung ist an zumindest einem Schneidenkamm an einem in Eindrehrichtung hinteren Ende ein Anschlag angeordnet, der eine Eindrehbewegung der Widerlagerhülse in die Längsnut begrenzt. Ein derartiger Anschlag kann selbstverständlich alternativ auch an einer anderen Stelle der Widerlagerhülse angeordnet sein. Der Anschlag kann zudem als eine sich in Axialrichtung über zumindest zwei Schneidenkämme ausgebildete Anschlagskante ausgebildet sein.

Mittels eines derartigen Anschlages kann eine haptische Rückmeldung an einen Monteur gegeben werden, dass die Widerlagerhülse ihre Einbaustellung erreicht hat. Ein derartiger Anschlag kann selbstverständlich auch eine Vorausrichtung der Widerlagerhülse in der zugehörigen Längsnut des Profilrohrs erzwingen, da er ein anderes, verdrehtes Einschieben der Widerlagerhülse in die Längsnut nicht zulässt. Mittels eines derartigen Anschlages wäre rein theoretisch sogar auch eine haptische Rückmeldung bezüglich einer axialen Einschubtiefe der Widerlagerhülse in die Längsnut möglich, wodurch eine weitere Qualitätssicherung der Montage erreicht werden kann.

Bei einer vorteilhaften Weiterbildung der erfindungsgemäßen Lösung ist in Eindrehrichtung vor jedem Schneidenkamm eine Vertiefung vorgesehen, insbesondere eine durchgehende Wendelnut oder einzelne Bohrungen, die einer Materialaufnahme dienen. Die Vertiefung ist dabei in einer Außenmantelfläche der Widerlagerhülse angeordnet. Mittels einer derartigen Vertiefung ist es möglich, die beim Eindrehen der Widerlagerhülse in die Längsnut durch die Schneidenkämme entstandenen Späne sowohl abzuführen als auch aufzunehmen, wobei ein Abführen beispielsweise über ein Ausblasen erfolgen kann. Ebenfalls ist auch denkbar, dass der durch das Eindrehen der Widerlagerhülse in die Längsnut und ein Einschneiden der Schneidenkämme in die Nutflanken bzw. den Nutengrund anfallende Spanabfall in der Vertiefung aufgenommen und dort zurückgehalten werden kann.

Bei einer vorteilhaften Weiterbildung der erfindungsgemäßen Lösung sind einzelne Schneidenkämme an ihrem in Eindrehrichtung vorderen Ende um einen Umfangswinkel β von 3° ≤ β ≤ 60°, vorzugsweise um einen Umfangswinkel β von 7°, versetzt zueinander angeordnet. Die Größe des Umfangswinkels β richtet sich dabei nach der Anzahl der Schneidenkämme. Bei acht Schneidenkämmen kommt man zu der ca. 7° Versetzung der einzelnen Schneidenkämme zueinander. Werden somit beispielsweise in Axialrichtung acht Schneidenkämme angeordnet, so befindet sich das vordere Ende des ersten Schneidenkamms um 56° versetzt zum vorderen Ende des achten Schneidenkamms. Das in Umfangsrichtung versetzte Anordnen der einzelnen Schneidenkämme bietet den großen Vorteil, dass diese bei einem Eindrehen der Widerlagerhülse in die Längsnut nacheinander und nicht gleichzeitig in den Nutengrund bzw. die Nutenflanken einschneiden, wodurch das aufzubringende Drehmoment zur Fixierung der Widerlagerhülse in der Längsnut im Vergleich zu nicht versetzt zueinander angeordneten Schneidenkämmen deutlich reduziert werden kann.

Zusätzlich oder alternativ kann auch vorgesehen sein, dass die einzelnen Schneidenkämme an ihrer Eindrehrichtung am hinteren Ende auf einer axialen Gerade liegen, d. h. nicht versetzt zueinander angeordnet sind. Hier bietet es sich an, die jeweils hinteren Enden der einzelnen Schneidenkämme durch eine axiale Anschlagskante bzw. Leiste miteinander zu verbinden, wodurch die zuvor beschriebene haptische Rückmeldung bei Erreichen des Einbauzustands problemlos möglich ist.

Bei einer weiteren vorteilhaften Ausführungsform der erfindungsgemäßen Lösung weist der selbstschneidende oder gewindeformende Befestigungsbereich drei über den Umfang verteilte Befestigungsabschnitte auf, was insbesondere beim Eindrehen in eine offene, hinterschnittene Längsnut von großem Vorteil ist. Bei einer speziellen Anordnung der einzelnen Befestigungsabschnitte, beispielsweise bei 0°, bei 107° und 253°, können bei entsprechend komplementär dazu ausgebildeter Längsnut sowohl ein widerstandsfreies Einschieben als auch ein gleichzeitiges Einschneiden der Befestigungsabschnitte in die beiden Nutflanken und den Nutengrund ermöglicht werden. Hierdurch lässt sich insbesondere ein Verkanten zuverlässig verhindern, wodurch die Montagequalität deutlich verbessert werden kann. Ebenfalls kann dabei ein verbessertes Zentrieren der Widerlagerhülse in der Längsnut erreicht werden.

Zweckmäßig ist zumindest ein Schneidenkamm an seinem in Eindrehrichtung vorderen Ende um einen Spanwinkel γ von ca. 20 ≤ γ ≤ 40°, insbesondere um γ ≈ 30°, zu einer Radialen R nach vorne geneigt, wodurch ein besonders scharfes Schnittbild erreicht werden kann. Bei einem in diesem bevorzugten Bereich liegenden Spanwinkel γ wird das Einschneiden in die Nutflanken und den Nutengrund erleichtert und die Längsnut zusätzlich nicht aufgedrückt. Hierdurch kann ein definiertes Einschneiden in die jeweilige Nutflanke bzw. den Nutengrund der Längsnut erreicht werden.

Bei einer weiteren vorteilhaften Ausführungsform der erfindungsgemäßen Lösung ist zumindest ein Schneidenkamm im Querschnitt keilförmig ausgebildet und weist eine radiale erste Flanke und eine um 15° ≤ α ≤ 50°, vorzugsweise um α ≈ 30°, dazu geneigte zweite Flanke auf. Hierdurch kann ähnlich einer Schraube ein zuverlässiges Einschneiden der Schneidenkämme in die Nutenflanken bzw. den Nutengrund der Längsnut erfolgen, ohne dass dabei befürchtet werden muss, dass die Längsnut aufgeweitet wird. Durch das Einschneiden bzw. Eingraben der Schneidenkämme in die Nutenflanken bzw. den Nutengrund kann zudem ein vergleichsweise hohes Auszugsmoment bei gleichzeitig kleinem Eindrehmoment erreicht werden. Durch die speziell geformten Schneidenkämme kann auch ein definierter Span erzeugt werden, was deutlich unterschiedlich zu bisherigen Gewinden von derartigen Widerlagerhülsen ist, die lediglich ein Eindrücken bzw. Einfurchen bewirkt haben.

Die vorliegende Erfindung beruht weiter auf dem allgemeinen Gedanken, einen Quickverbinder mit einer solchen zuvor beschriebenen Widerlagerhülse anzugeben, der nicht nur die Widerlagerhülse, sondern auch eine diese durchgreifende Verbindungsschraube und einen mit der Verbindungsschraube verschraubten Nutenstein aufweist. Ein derartiger Nutenstein kann beispielsweise entsprechend der WO 2019/007911 A1 ausgebildet sein. Ein derartiger Quickverbinder besitzt somit die Verbindungsschraube mit einem Kopf und einem daran angeordneten Werkzeugeingriff, beispielsweise einem Innenmehrkant, welcher von der einen Seite in die Widerlagerhülse eingeschoben und durch diese hindurchgeschoben und auf der anderen Seite mit dem Nutenstein verschraubt wird. Der Kopf der Verbindungsschraube befindet sich dabei in Bezug auf die Widerlagerhülse an deren, in Einschubrichtung in Längsrichtung gesehenen vorderen Ende. Über den Werkzeugeingriff, beispielsweise den Innenmehrkant, kann der Quickverbinder vergleichsweise einfach angezogen werden. Die Widerlagerhülse kann bei diesem Quickverbinder oder auch generell einen Freischliff aufweisen, der bei auf die Verbindungsschraube aufgeschraubtem Nutenstein oberflächenfluchtend mit einer Seitenfläche des Nutensteins verläuft. Mittels eines derartigen Quickverbinders, der zudem als vorgefertigte Baugruppe ausgebildet sein kann, lässt sich eine vergleichsweise einfache, zuverlässige und auch schnelle und damit kostengünstige Montage einer Querverbindung entsprechend dem nachfolgenden Absatz an einem Profilrohrsystem ausbilden.

Die vorliegende Erfindung beruht weiter auf dem allgemeinen Gedanken, eine Querverbindung an einem Profilrohrsystem anzugeben, mit einem ersten Profilrohr mit hinterschnittenen Längsnuten und einem rechtwinklig dazu angeordneten zweiten Profilrohr mit ebenfalls hinterschnittenen Längsnuten. Des Weiteren vorgesehen ist ein Quickverbinder entsprechend dem vorhergehenden Absatz, dessen Widerlagerhülse in eine hinterschnittene Längsnut des ersten Profilrohrs zunächst eingeschoben und dann analog zu einem Bajonettverschluss um ca. 60 - 90° verdreht wird, sodass sich deren Schneidenkämme in den Nutengrund bzw. den Nutenflanken der Längsnut eingraben und dadurch die Widerlagerhülse axial unverschieblich fixieren. Die Verbindungsschraube wiederum ist parallel zur Symmetrieachse des ersten Profilrohrs in der hinterschnittenen Längsnut und in der Widerlagerhülse angeordnet. Der Quickverbinder greift mit seinem Nutenstein in die hinterschnittene Längsnut des zweiten Profilrohrs ein, wodurch eine Fixierung des ersten Profilrohrs über den Quickverbinder am zweiten Profilrohr erfolgt. Mit dem erfindungsgemäßen Quickverbinder kann somit eine erfindungsgemäße Querverbindung an einem Profilrohrsystem konstruktiv zuverlässig, einfach zu montieren, lösbar und zudem kostengünstig hergestellt werden.

Die vorliegende Offenbarung beruht weiter auf dem allgemeinen Gedanken, eine Steckschlüsselnuss zum Eindrehen der in den vorherigen Absätzen beschriebenen Widerlagerhülse bzw. des Quickverbinders in eine hinterschnittene Längsnut eines Profilrohrs anzugeben, mit einer Ausnehmung zur Aufnahme eines Nutensteins, wobei die Widerlagerhülse mit ihrem Freischliff ebenfalls in die Ausnehmung der Steckschlüsselnuss eingreift, sodass die Ausnehmung formschlüssig mit dem Freischliff der Widerlagerhülse zusammenwirkt und über die Steckschlüsselnuss ein Drehmoment auf die Widerlagerhülse aufgebracht werden kann. Mittels eines derartigen Werkzeugs lässt sich die Montage des Quickverbinders in einer zugehörigen Längsnut des Profilrohrs deutlich erleichtern und es lassen sich zudem Fehlerquellen eliminieren. Zur Montage muss lediglich der Quickverbinder mit seinem Nutenstein in die Ausnehmung der Steckschlüsselnuss eingeschoben werden, bis die Widerlagerhülse mit ihrem Freischliff (zwei parallele Kanten) ebenfalls formschlüssig in die Ausnehmung eingreift. Anschließend kann die Widerlagerhülse in die entsprechende und zugehörige Längsnut eingeschoben und durch ein Verdrehen der Steckschlüsselnuss um 60 - 90° auszugssicher darin fixiert werden. Die Montage erfolgt dabei ähnlich dem Schließen eines Bajonettverschlusses. Ein Einschieben der Widerstandshülse in die Längsnut erfolgt dabei so weit, bis die Steckschlüsselnuss stirnseitig plan an dem jeweiligen Profilrohr anliegt, wodurch eine definierte Axialposition vorgegeben werden kann. Die Steckschlüsselnuss weist auf ihrer der Ausnehmung abgewandten Seite eine Vierkantausnehmung auf, beispielsweise zum Eingriff eines Hebels. Analog kann ein derartiger Steckschlüssel nun selbstverständlich auch einen Innenmehrkant aufweisen, beispielsweise einen Innensechskant.

Zweckmäßig ist in der Ausnehmung ein Magnet angeordnet, über welchen der Nutenstein und insbesondere auch der gesamte Quickverbinder gehalten werden. Mittels eines derartigen Magneten, beispielsweise eines Neodym-Magneten, kann eine deutlich erleichterte Montage des Quickverbinders in der Längsnut erreicht werden, da ein unbeabsichtigtes Herausfallen des Quickverbinders aus der Ausnehmung der Steckschlüsselnuss zuverlässig unterbunden werden kann.

Die vorliegende Erfindung beruht weiter auf dem allgemeinen Gedanken, ein Herstellungsverfahren einer zuvor beschriebenen Querverbindung unter Verwendung der zuvor beschriebenen Steckschlüsselnuss anzugeben, bei der zunächst ein Quickverbinder hergestellt wird, indem die Verbindungsschraube durch die Widerlagerhülse gesteckt und in den Nutenstein eingeschraubt wird. Anschließend wird der Quickverbinder mit seinem Nutenstein so weit in die Ausnehmung eingeschoben, bis die beiden parallelen Ränder der Ausnehmung formschlüssig mit dem Freischliff an der Widerlagerhülse zusammenwirken und darüber ein Drehmoment übertragen werden kann. Wiederum anschließend wird die Widerlagerhülse in die Längsnut des ersten Profilrohrs eingeschoben und anschließend um ca. 60 - 90° verdreht, wodurch sich die Schneidenkämme der Widerlagerhülse nacheinander in die Nutflanken und den Nutengrund einschneiden und die Widerlagerhülse axial unverschieblich in der Längsnut fixiert wird. Dann kann die Steckschlüsselnuss abgezogen und das zweite Profilrohr derart quer am ersten Profilrohr angeordnet werden, dass der Nutenstein in eine Längsnut am zweiten Profilrohr eingreift. Nun wird die Verbindungsschraube, beispielsweise mittels eines Inbusschlüssels, angezogen und damit der Nutenstein in der Längsnut des zweiten Profilrohrs verdreht und die Querverbindung fixiert. Alles in allem lässt sich mit dem erfindungsgemäßen Herstellungsverfahren eine Querverbindung kostengünstig, äußerst schnell, zuverlässig und wenig fehleranfällig herstellen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch
- Fig. 1a,: b eine erfindungsgemäße Widerlagerhülse in unterschiedlichen Ansichten,
- Fig. 2: eine erfindungsgemäße Widerlagerhülse in einer weiteren Ansicht,
- Fig. 3: eine Draufsicht auf eine erfindungsgemäße Widerlagerhülse mit Winkelangaben zu zugehörigen Schneidenkämmen,
- Fig. 4: eine Schnittdarstellung durch einen erfindungsgemäßen Schneidenkamm,
- Fig. 5: eine axiale Ansicht auf in Eindrehrichtung vordere Endbereiche von Schneidenkämmen zur Veranschaulichung eines Spanwinkels,
- Fig. 6: eine weitere mögliche Ausführungsform einer erfindungsgemäßen Widerlagerhülse,
- Fig. 7: eine ebenfalls weitere Ausführungsform der erfindungsgemäßen Widerlagerhülse mit unterschiedlichen Vertiefungen,
- Fig. 8: als Bohrungen ausgebildete Vertiefungen,
- Fig. 9: eine Schnittdarstellung durch ein Profilrohr im Bereich einer Längsnut mit einer lose darin angeordneten Widerlagerhülse,
- Fig. 10: eine Darstellung wie in Figur 9, jedoch bei in der Längsnut fixierter, d. h. verdrehter, Widerlagerhülse,
- Fig. 11: eine Schnittdarstellung durch eine Querverbindung bei einem entsprechenden Profilrohrsystem mit darin angeordnetem Quickverbinder mit Widerlagerhülse,
- Fig. 12a, b: unterschiedliche Ansichten einer Steckschlüsselnuss
- Fig. 13: eine Steckschlüsselnuss mit Magnet und erfindungsgemäßem Quickverbinder,
- Fig. 14: eine Seitenansicht auf zwei axial auf Stoß miteinander verbundene Profilrohre mit zwei Widerlagerhülsen,
- Fig. 15: eine weitere mögliche Ausführungsform einer erfindungsgemäßen Widerlagerhülse mit abgerundetem Freischliff,
- Fig. 16: eine axiale Ansicht auf die Widerlagerhülse gemäß Fig. 15,
- Fig. 17, 18: unterschiedliche Ansichten einer Steckschlüsselnuss mit Markierung.

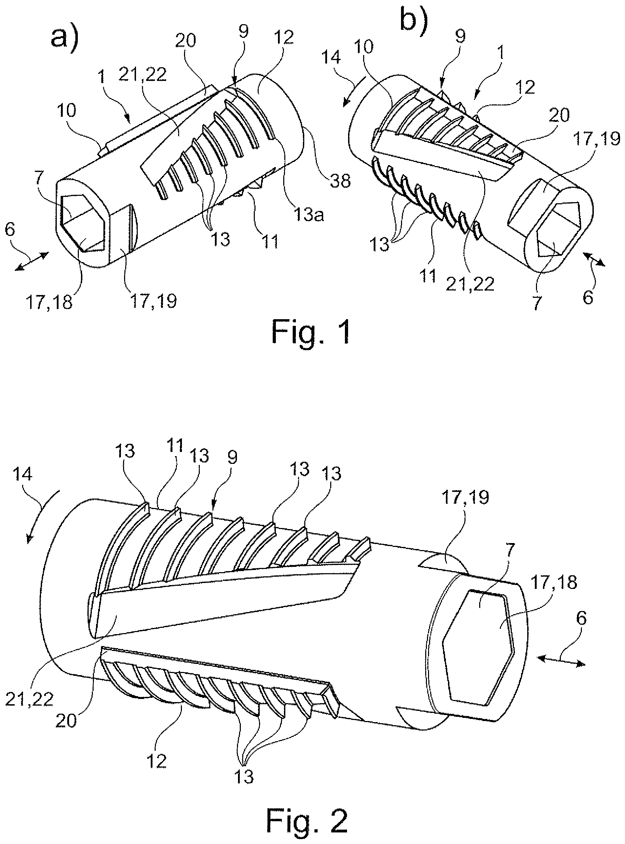

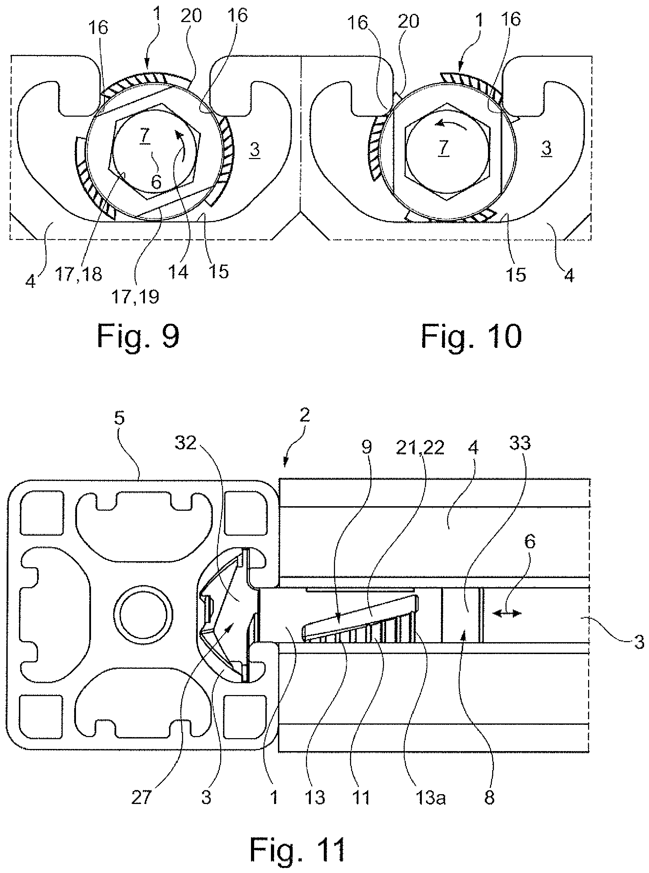

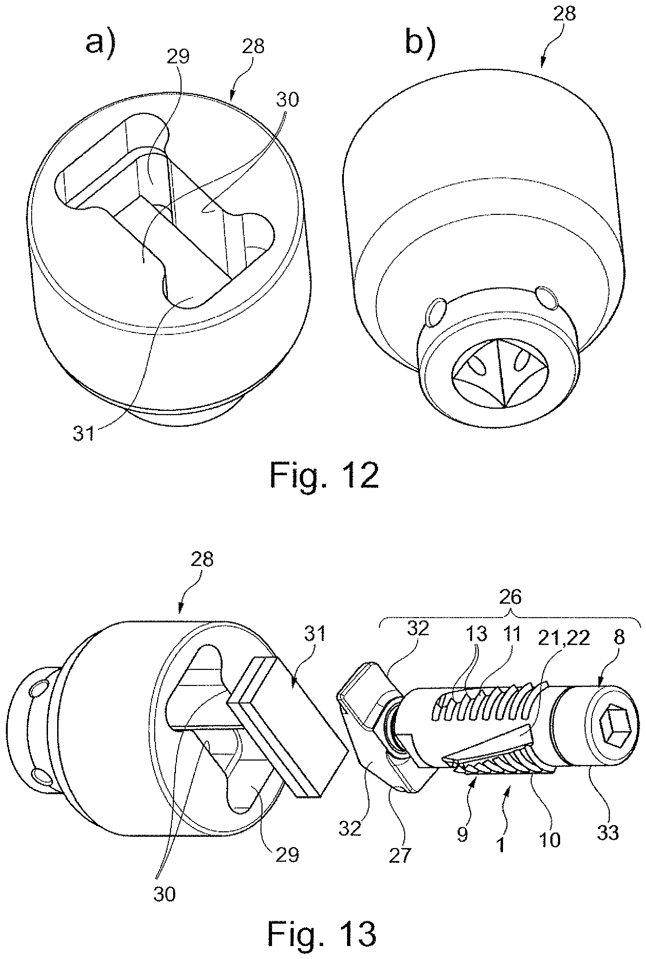

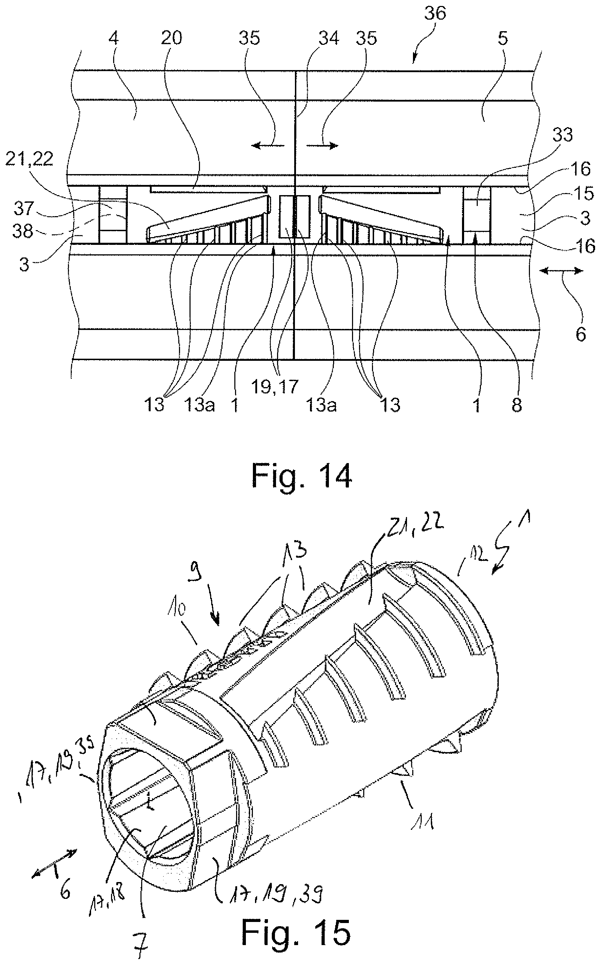

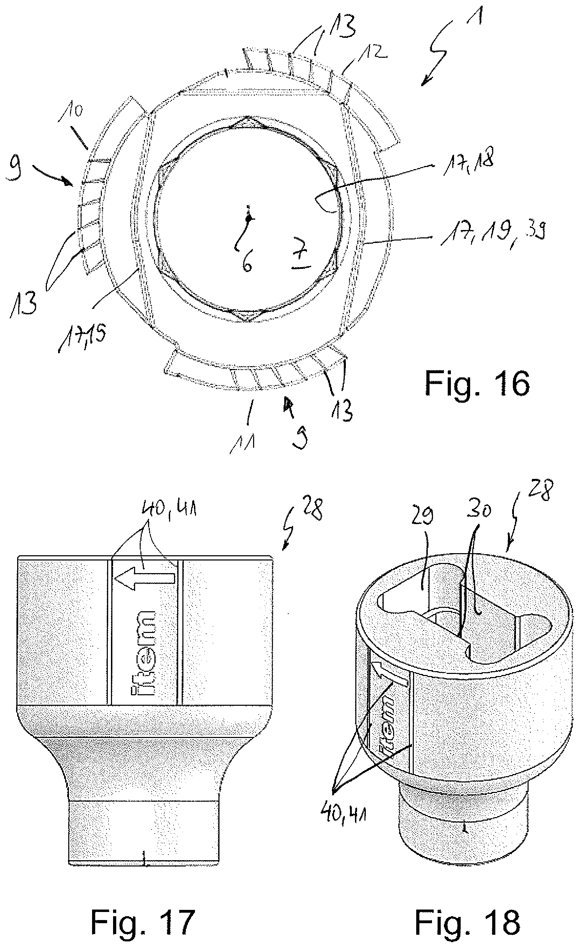

Entsprechend den Figuren 1 bis 7 sowie 9 bis 11 und 13, 15 und 16 weist eine erfindungsgemäße Widerlagerhülse 1 für beispielsweise eine Querverbindung 2 (vgl. Figur 11) von zwei rechtwinklig aufeinander stehenden, mit hinterschnittenen Längsnuten 3 versehenen Profilrohren 4, 5 eine sich entlang einer axialen Richtung 6 erstreckende Durchgangsöffnung 7 zum Durchführen einer Verbindungsschraube 8 (vgl. Figuren 11 und 13) auf. Erfindungsgemäß vorgesehen ist ein außenliegender, selbstschneidender oder gewindeformender Befestigungsbereich 9, welcher zumindest zwei, hier drei, über den Umfang verteilte Befestigungsabschnitte 10, 11 und 12 (vgl. insbesondere die Figuren 9 und 10) aufweist. Jeder Befestigungsabschnitt 10, 11, 12 besitzt zumindest zwei, vorzugsweise sogar drei oder mehr, in Axialrichtung 6 benachbarte, insbesondere selbstschneidende oder gewindeformende, Schneidenkämme 13, hier sogar acht Schneidenkämme 13, die in Eindrehrichtung 14 versetzt zueinander angeordnet sind, sodass bei einem Eindrehen der Widerlagerhülse 1 in eine Längsnut 3 eines Profilrohrs 4 die Schneidenkämme 13 nacheinander in einen Nutengrund 15 und zumindest eine Nutenflanke 16 bzw. einen Wandvorsprung in diesem Bereich einschneiden. Die einzelnen Schneidenkämme 13 können gewindeformend ausgebildet sein. Mit einem gewindeformenden Befestigungsbereich 9 werden die Schneidenkämme 13 spanlos durch Kaltumformung in die Widerstandshülse 1 eingedrückt. Durch die Schneidenkämme 13 wird das Material verdrängt. Um das hierfür erforderliche Drehmoment aufbringen zu können, besitzt die erfindungsgemäße Widerlagerhülse 1 zusätzlich noch zumindest einen Werkzeugeingriff 17, der beispielsweise als Innenmehrkant 18, hier als Innensechskant, und/oder als Freischliff 19 ausgebildet sein kann. Die gemäß den Figuren 1, 2, 7 sowie 9 und 10 gezeigten Widerstandshülsen 1 besitzen dabei zwei derartige Werkzeugeingriffe 17, nämlich einen Innenmehrkant 18 und einen Freischliff 19. Bei den Widerlagerhülsen 1 gemäß den Fig. 15 und 16 sind die Freischliffe 19 nicht als parallele Ebenen ausgeführt, sondern als zumindest teilweise konvexe Flächen 39 bzw. als gebogene Ebenen, die eine Punktkontaktierung anstatt einer Flächenkontaktierung ermöglichen und dadurch eine Nutzentrierung bei einer Querverbindung 2 unterstützen bzw. vereinfachen. Ein Werkzeug, beispielsweise eine Steckschlüsselnuss 28 (vgl. auch die Fig. 12, 13, 17 und 18) greift somit nur linienförmig an den Flächen 39 an, nicht aber flächig.

Die Schneidenkämme 13 sind üblicherweise ohne Steigung, das heißt axial auf gleicher Höhe umlaufend ausgebildet. Dies bietet den Vorteil, dass sich die Widerlagerhülse 1 beim Fixieren, das heißt beim Eindrehen nicht mehr in Axialrichtung verstellt. Alternativ ist auch vorstellbar, dass die Schneidenkämme 13 mit Steigung, das heißt gewindeartig, ausgerichtet sind.

An zumindest einem Schneidenkamm 13 ist an einem in Eindrehrichtung 14 hinteren Ende ein Anschlag 20 angeordnet, der eine Eindrehbewegung der Widerlagerhülse 1 in die Längsnut 3 begrenzt. Dieser Anschlag 20 kann beispielsweise als eine sich in Axialrichtung 6 über zumindest zwei Schneidenkämme 13 ausgebildete Anschlagskante ausgebildet sein, wie dies gemäß der Figur 2 dargestellt ist. Mittels eines derartigen Anschlages 20 ist es möglich, die bajonettartige Montagebewegung zu begrenzen und zugleich eine haptische Rückmeldung über eine Einbaulage der Widerstandshülse 1 in der Längsnut 3 zu geben, wodurch sich ein Werker sicher sein kann, dass die Widerstandshülse 1 zuverlässig und korrekt montiert ist.

Selbstverständlich ist auch vorstellbar, dass der Anschlag 20 nicht direkt an den Schneidenkamm 13 anschließt, sondern beabstandet dazu angeordnet ist. Der Anschlag 20 muss lediglich so ausgebildet sein, dass er eine Eindreh-/Montagebewegung begrenzt und eine haptische Rückmeldung über das Erreichen der Einbaulage der Widerstandshülse 1 in der Längsnut 3 gibt.

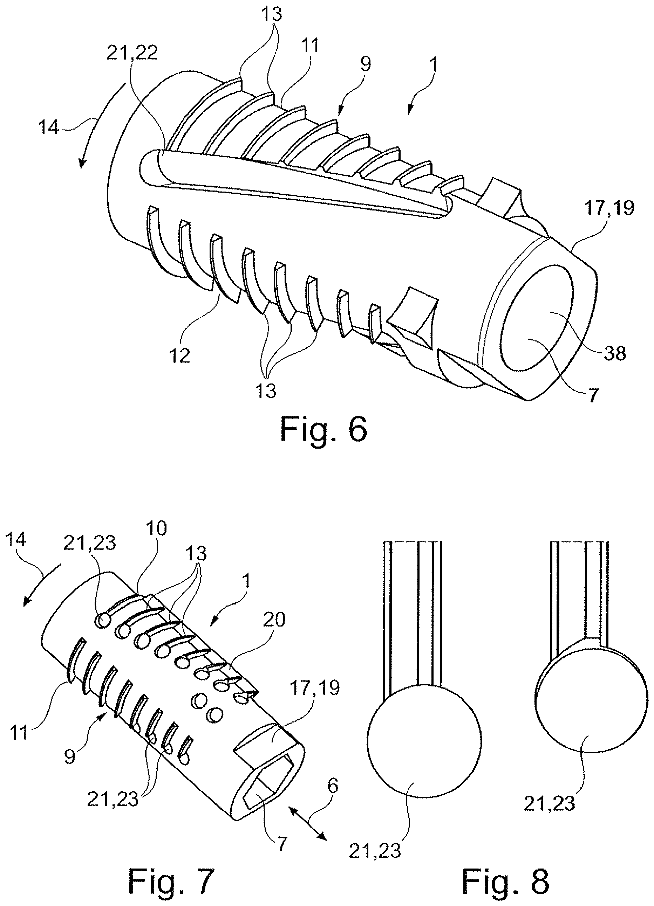

In Eindrehrichtung 14 vor jedem Schneidenkamm 13 ist darüber hinaus eine Vertiefung 21 vorgesehen, die beispielsweise als durchgehende Wendelnut 22 (vgl. die Figuren 1, 2, 6 sowie 13) oder als einzelne Bohrung 23 ausgebildet sein kann (vgl. die Figuren 7 und 8). Eine derartige Vertiefung 21, die in die Außenmantelfläche der Widerstandshülse 1 eingelassen ist, ermöglicht eine Aufnahme von sich beim Eindrehen der Widerstandshülse 1 in die Längsnut 3 durch die Schneidenkämme 13 entstehenden Späne. Das Sammeln dieser Späne in den Vertiefungen 21 kann dabei ein Sammeln der Späne in diesen bedeuten und auch ein späteres Ausblasen ermöglichen. Unter dem Begriff "Bohrung" müssen selbstverständlich keine Bohrungen im gebohrten Sinne verstanden werden, sondern es können auch kreisrunde Vertiefungen sein.

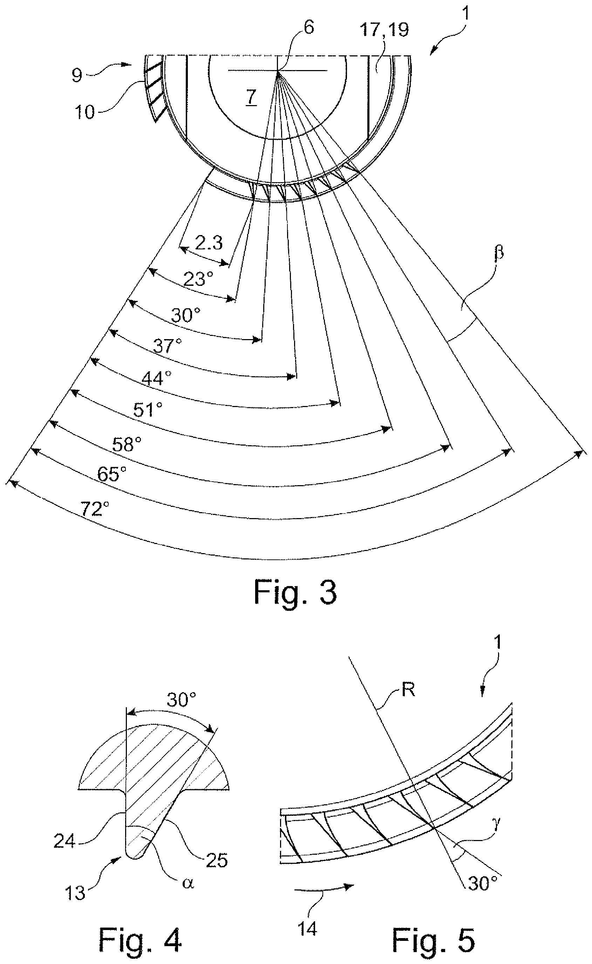

Die einzelnen Schneidenkämme 13 eines Befestigungsabschnitts 10, 11, 12 sind an ihrem in Eindrehrichtung 14 vorderen Ende vorzugsweise um einen Umfangswinkel β von 3° ≤ β ≤ 60°, vorzugsweise um einen Umfangswinkel β von 7°, versetzt zueinander angeordnet, wie dies gem. der Fig. 3 dargestellt ist. Die Größe des Umfangswinkels β richtet sich dabei nach der Anzahl der Schneidenkämme 13. Durch die in Umfangsrichtung bzw. Eindrehrichtung 14 versetzt zueinander angeordneten Schneidenkämme 13 kann erreicht werden, dass diese nach einem widerstandslosen und berührungsfreien Einschieben der Widerstandshülse 1 in die Längsnut 3 beim anschließenden Verdrehen nacheinander und nicht gleichzeitig mit dem Werkstoff des Profilrohrs 4, 5 in Eingriff kommen bzw. sich in diesen einschneiden. Hierdurch kann insbesondere das zur Montage der Widerstandshülse 1 erforderliche Drehmoment deutlich reduziert werden, ebenso wie eine Gefahr eines Aufweitens der Längsnut 3. An ihrem in Eindrehrichtung 14 hinteren Ende sind die einzelnen Schneidenkämme 13 in Umfangsrichtung nicht versetzt zueinander angeordnet, d. h., sie liegen im Wesentlichen auf einer axialen Gerade.

Betrachtet man eine Querschnittsform der erfindungsgemäßen Schneidenkämme 13 gemäß der Figur 4, so kann man an dieser erkennen, dass der dort dargestellte Schneidenkamm 13 im Querschnitt keilförmig ausgebildet ist und eine radiale erste Flanke 24 sowie eine um 15° ≤ α ≤ 50°, vorzugsweise um α ≈ 30° dazu geneigte zweite Flanke 35 besitzt. Dies ist abhängig davon, wie viele Schneidenkämme 13 vorhanden sind. Bei beispielsweise zwölf Schneidenkämmen 13 und einem Winkel von α ≈ 50°, erfordert es mehr Eindrehmoment und damit mehr Kraft, die Widerstandshülse 1 einzudrehen, da mehr Material, beispielsweise Aluminium, spanend abgehoben werden muss. Bei vier Schneidenkämmen 13 und einem Winkel von α ≈ 15° wird das Eindrehen leichter, allerdings steigt die Gefahr des Brechens der Schneidenkämme 13, wenn die Widerstandshülse 1 axial aus der Profilnut 3 gezogen wird.

Betrachtet man die Schneidenkämme 13, so kann man erkennen, dass diese an ihrem in Eindrehrichtung 14 vorderen Ende um einen Spanwinkel γ von ca. 20 ≤ γ ≤ 40°, insbesondere um γ ≈ 30°, zu einer Radialen R nach vorne geneigt sind (vgl. Figur 5), wodurch ein besonders scharfes Schnittbild erreicht werden kann.

Der Grund für diese Geometrie ist, dass das Einschneiden in die Nutflanken 16 und den Nutengrund 15 dadurch erleichtert wird und die Längsnut 3 zusätzlich nicht aufgedrückt wird. Im Vergleich zu einem kleineren Spanwinkel, kann bei einem Spanwinkel in dem zuvor genannten Bereich das Eindrehmoment reduziert werden, während es bei einem kleineren oder sogar einem negativen Spanwinkel zu einem unerwünschten Aufdrücken der Längsnut 3 kommen kann. Bei größerem Spanwinkel γ steigt zudem die Gefahr, dass die Schneide bzw. der Schneidenkamm 13 instabil wird und beim Eindrehen wegbricht, weswegen sich ein Spanwinkel γ zwischen 20° und 40°, vorzugsweise 30°, als besonders vorteilhaft herausgestellt hat.

Alles in allem lässt sich mit der erfindungsgemäßen Widerstandshülse 1 eine einfache, zuverlässige, hohe Auszugskräfte aufweisende und kostengünstige Querverbindung 2 zweier Profilrohre 4, 5 erreichen. Insbesondere auch ohne zwingend erforderliches, weiteres Werkzeug.

Gemäß der Figur 13 kann die erfindungsgemäße Widerlagerhülse 1 auch Bestandteil eines Quickverbinders 26 sein, der neben der Widerstandshülse 1 zusätzlich noch die Verbindungsschraube 8 und einen Nutenstein 27 umfasst. Der Nutenstein 27 kann dabei beispielsweise ein Nutenstein analog der WO 2019/007911 A1 sein, oder generell als Befestigungsmutter ausgebildet werden. Ein derartiger Quickverbinder 26 bietet dabei den großen Vorteil, dass dieser bereits als vorgefertigte Baugruppe verfügbar und anlieferbar ist, wodurch die Herstellung der Querverbindung 2 entsprechend der Figur 11 deutlich schneller zu montieren ist. Zur Herstellung des Quickverbinders 26 wird lediglich die Verbindungsschraube 8 durch die Durchgangsöffnung 7 der Widerlagerhülse 1 gesteckt und an ihrem freien Ende mit dem Nutenstein 27 leicht verschraubt.

Ein weiterer Aspekt der Offenbarung ist eine Steckschlüsselnuss 28, wie diese gemäß den Figuren 12 und 13 dargestellt ist und wie diese zum Eindrehen der Widerlagerhülse 1 in eine hinterschnittene Längsnut 3 eines Profilrohrs 4, 5 verwendet werden kann. Die Steckschlüsselnuss 28 besitzt eine Ausnehmung 29 zur Aufnahme eines Nutensteins 27, die zwei parallele Ränder 30 aufweist, über welche ein formschlüssiges Zusammenwirken mit der Widerlagerhülse 1 bzw. deren Freischliff 19 sowie ein Aufbringen eines Drehmoments auf dieselbe möglich ist. In der Ausnehmung 29 kann darüber hinaus ein Magnet 31 angeordnet sein, über welchen der Nutenstein 27 und darüber unter Umständen sogar der gesamte Quickverbinder 26 haltbar sind. Dies erleichtert eine Montage erheblich, da ein unbeabsichtigtes Herausfallen des Quickverbinders 26 aus der Ausnehmung 29 der Steckschlüsselnuss 28 vermieden werden kann. Die beiden Ränder 30 bzw. parallelen Seiten 30 der Ausnehmung 29 sind dabei komplementär zu dem Freischliff 19 und vorzugsweise komplementär zu den Seitenflächen 32 des Nutensteins 27 ausgebildet, sodass der Nutenstein 27 formschlüssig in der Ausnehmung 29 der Steckschlüsselnuss 28 aufgenommen werden kann. Ein derartiger Formschluss ist auch zwischen den Rändern 30 der Ausnehmung 29 und dem Freischliff 19 der Widerlagerhülse 1 vorgesehen, sodass über die Steckschlüsselnuss 28 ein Aufbringen eines Drehmoments auf die Widerlagerhülse 1 zum Eindrehen derselben in die Längsnut 3 möglich ist.

In den Fig. 17 und 18 ist eine weitere Ausführungsform einer solchen Steckschlüsselnuss 28 gezeigt, bei der eine Markierung 40 vorgesehen ist, beispielswiese eine Lasermarkierung 41, die eine Lage der Längsnut 3 auch bei einem diese verdeckenden Nutenstein 27 anzeigt. Eine derartige Lasermarkierung 41 ist äußerst widerstandsfähig und deutlich beständiger als eine reine Farbmarkierung.

Im Folgenden soll nun noch das Herstellen einer Querverbindung 2 beschrieben werden. Zunächst wird die Verbindungsschraube 8 durch die Durchgangsöffnung 7 der Widerstandshülse 1 gesteckt und an ihrem freien Ende, d. h. an dem einem Kopf 33 abgewandten Ende, in den Nutenstein 27 eingeschraubt. Auf diese Weise wird somit der Quickverbinder 26 entsprechend der Figur 13 hergestellt. Anschließend wird der Quickverbinder 26 mit seinem Nutenstein 27 so weit in die Ausnehmung 29 der Steckschlüsselnuss 28 eingeschoben, bis die beiden parallelen Ränder 30 der Ausnehmung 29 formschlüssig mit dem Freischliff 19 an der Widerlagerhülse 1 zusammenwirken. Anschließend wird die Widerlagerhülse 1 in die Längsnut 3 des ersten Profilrohrs 4 eingeschoben, wie dies gemäß der Figur 9 dargestellt ist. Das Einschieben erfolgt dabei berührungsfrei bzw. berührungsarm, wobei insbesondere die einzelnen Schneidenkämme 13 vorzugsweise nicht mit einer Innenoberfläche der Längsnut 3 in Kontakt kommen.

Das Einschieben erfolgt dabei so weit, bis eine Stirnfläche der Steckschlüsselnuss 28 an einer Stirnseite des Profilrohrs 4 anliegt. Anschließend wird die Steckschlüsselnuss 28 verdreht, woraufhin sich die einzelnen Schneidenkämme 13 der Befestigungsabschnitte 10, 11, 12 nacheinander in den Nutengrund 15 und die Nutenflanken 16 einschneiden. "Nacheinander" soll in diesem Zusammenhang bedeuten, dass die jeweils in Umfangsrichtung längsten, beispielsweise die in Einsetzrichtung vordersten oder hintersten Schneidenkämme 13 der Befestigungsabschnitte 10, 11, 12, gleichzeitig in einen zugehörigen Bereich, beispielsweise eine Nutenflanke 16 oder einen Nutengrund 15 der Längsnut 3 einschneiden. Die zur Axialfixierung erforderliche Verdrehung beträgt dabei ca. 60 - 90°, sodass das Fixieren der Widerlagerhülse 1 in der Längsnut 3 im Wesentlichen dem Schließen eines Bajonettverschlusses entspricht. Gemäß der Figur 10 ist dabei die Widerlagerhülse 1 in verdrehtem und damit fixiertem Zustand gezeigt, in welchem sich die einzelnen Schneidenkämme 13 fest in die Nutenflanken 16 bzw. den Nutengrund 15 eingeschnitten bzw. eingegraben haben. Die Drehbewegung wird dabei beendet, sobald der Anschlag 20 beispielsweise an der Nutenflanke 16 (vgl. Figur 10) anliegt. Hierdurch wird einem Monteur eine haptische Rückmeldung über den Einbauzustand gegeben.

Anschließend kann die Steckschlüsselnuss 28 abgezogen und das zweite Profilrohr 5 derart quer am ersten Profilrohr 4 angeordnet werden (vgl. die Figur 11), dass der Nutenstein 27 in eine Längsnut 3 am zweiten Profilrohr 5 eingreift. Dieser kann dabei durch eine Nutöffnung in die Längsnut 3 des zweiten Profilrohrs 5 eingeschoben werden. Durch ein Verdrehen der Verbindungsschraube 8 wird nun auch der Nutenstein 27 verdreht und gleichzeitig gegen die Widerstandshülse 1 verspannt, wodurch die Querverbindung 2 fixiert wird.

Entsprechend Fig. 14 ist eine Seitenansicht auf zwei axial auf Stoß 34 miteinander verbundene Profilrohre 4, 5 mit zwei Widerlagerhülsen 1 gezeigt. Die beiden Widerlagerhülsen 1 sind dabei axial fluchtend zueinander angeordnet in zwei axial fluchtenden Längsnuten 3 der Profilrohre 4, 5. Wie dabei deutlich zu erkennen ist, sind die Widerlagerhülsen 1 gemäß Fig. 14 anders ausgebildet, als die beispielsweise in der Fig. 11 gezeigte Widerlagerhülse 1.

In Fig. 11 ist der in Umfangsrichtung längste Schneidenkamm 13a in einer vom Stoß 34 ausgehenden Einsteckrichtung 35 der Widerlagerhülse 1 in die Längsnut 3 ganz vorne, während er gemäß der Fig. 14 in Einsteckrichtung 35 vom Stoß 34 ausgehend ganz hinten angeordnet ist. Dabei ist die Einsteckrichtung 35 beim Profilrohr 4 entgegengesetzt zur Einsteckrichtung 35 am Profilrohr 5 ausgerichtet, da die Widerlagerhülsen 1 immer vom freien Stirnende (nachher Stoß 34) her in die jeweilige Längsnut 3 eingesetzt werden. Dabei hat sich als vorteilhaft heraus gestellt, die in Umfangsrichtung längeren Schneidenkämme 13 im hinteren Bereich der Widerlagerhülse 1 und somit auch weiter hinten im Profil anzuordnen, da sich dann höhere Kräfte aufnehmen lassen.

Gemäß Fig. 14 ist somit der in Umfangsrichtung längste Schneidenkamm 13,13a direkt benachbart zu dem Werkzeugeingriff 17, hier sogar zu dem Freischliff 19, angeordnet.

Die fluchtend zueinander in die jeweiligen Längsnuten 3 eingedrehten Widerlagerhülsen 1 erlauben es, eine Verbindungsschraube 8 durch die ebenfalls fluchtend zueinander angeordneten Durchgangsöffnungen 7 der Widerlagerhülsen 1 zu stecken und eine Axialverbindung 36 zweier Profilrohre 4, 5 vergleichsweise einfach zu realisieren. Die Verbindungschraube 8 liegt entsprechend Fig. 14 mit ihrem Kopf 33 an der rechten Widerlagerhülse 1 an und ist an ihrem freien Ende mit einer Mutter 37 verschraubt.

Ferner kann eine alternative Ausführungsform der Widerlagerhülse 1 zusätzlich mit einem Innengewinde 38 konzentrisch zur Durchgangsöffnung 7 versehen sein, das komplementär zur Verbindungsschraube 8 und somit zur Aufnahme dieser Verbindungsschraube 8 ausgebildet ist. Bei einer Axialverbindung 36 zweier Profilrohre 4, 5 könnte mit Hilfe der zuvor beschriebenen Ausführungsform der Widerlagerhülse 1 mit Innengewinde 38 auf die zusätzliche Mutter 37 verzichtet werden. Zur Herstellung der Axialverbindung 36 zweier Profilrohre 4, 5 werden dahingehend lediglich eine erste Widerlagerhülse 1 ohne Innengewinde 38, eine zweite Widerlagerhülse 1 mit Innengewinde 38 und eine Verbindungsschraube 8 benötigt. Die Verbindungsschraube 8 wird hierbei durch die Durchgangsöffnung 7 der erste Widerlagerhülse 1 geführt und greift in das Innengewinde 38 der zweiten Widerlagerhülse 1 ein.

Alles in allem kann mit der erfindungsgemäßen Widerstandshülse 1 und dem erfindungsgemäßen Quickverbinder 26 ein angenehmes und leichtes Eindrehen der Widerstandshülse 1 in das Material der Längsnut 3 erfolgen, da sich die einzelnen Schneidenkämme 13 nicht gleichzeitig in das Material einschneiden, sondern über ihre versetzte Anordnung nacheinander. Über den Anschlag 20 kann darüber hinaus eine haptische Rückmeldung über das Erreichen der Einbaulage erreicht werden. Die erfindungsgemäße Verbindungstechnik und die erfindungsgemäße Widerstandshülse 1 ermöglichen somit ein kraftarmes Montieren sowie eine wenig fehleranfällige Montage. Eine Montage kann dabei beispielsweise über einen ganz normalen Gabelschlüssel und den Freischliff 19 bzw. einen Inbusschlüssel und den Innenmehrkant 18 erfolgen. Der Innenmehrkant 18 kann natürlich auch als Torx ausgeführt sein (vgl. Fig. 15, 16) Selbstverständlich sind auch Spezialwerkzeuge, wie beispielsweise die Steckschlüsselnuss 28 gemäß den Figuren 12 und 13, einsetzbar, wobei insbesondere die zuletzt genannte Steckschlüsselnuss 28 eine besonders schnelle, leichte und kostengünstige Montage erlaubt, die zudem eine korrekte Montage nahezu erzwingt.

Über die Vertiefungen 21 kann darüber hinaus eine Spanabfuhr bzw. eine Spansammlung erfolgen, wobei die Späne beispielsweise durch ein Ausblasen nach der Montage leicht entfernt werden können. Die erfindungsgemäße Widerstandshülse 1 weist jedoch nicht nur eine vergleichsweise geringe Eindrehkraft durch die in Umfangsrichtung versetzt zueinander angeordneten Schneidenkämme 13 auf, sondern auch eine vergleichsweise hohe Nutauszugskraft von vorzugsweise über 12 kN. Durch eine spezielle Anordnung der einzelnen Schneidenkämme 13, durch welche diese gleichzeitig in den Nutengrund 15 und die Nutflanken 16 eingreifen kann, kann zudem ein Verkanten zuverlässig verhindert werden. Die Profilrohre 4, 5 sind üblicherweise aus Aluminium ausgebildet. Des Weiteren kann mit der erfindungsgemäßen Widerlagerhülse 1 auch ein Aufweiten und damit ein Verformen der Längsnut 3, beispielsweise durch ein Aufbiegen der Nutflanken 16, zuverlässig vermieden werden, was besonders wichtig ist, um derartige Profilrohre 4, 5 immer wieder über den erfindungsgemäßen Quickverbinder 26 fugenfrei miteinander zu verbinden.

## Patentansprüche

1. Widerlagerhülse (1) für ein zumindest eine hinterschnittene Längsnut (3) aufweisendes Profilrohr (4, 5), mit einer sich entlang einer axialen Richtung (6) erstreckenden Durchgangsöffnung (7) zum Durchführen einer Verbindungsschraube (8), mit einem außenliegenden selbstschneidenden oder gewindeformenden Befestigungsbereich (9), welcher zumindest zwei über den Umfang verteilte und in Umfangsrichtung voneinander beabstandete Befestigungsabschnitte (10, 11, 12) aufweist,
**dadurch gekennzeichnet,**
**dass** jeder Befestigungsabschnitt (10, 11, 12) zumindest zwei in Axialrichtung (6) benachbarte Schneidenkämme (13) aufweist, die in Eindrehrichtung (14) versetzt angeordnet sind, sodass die Schneidenkämme (13) bei einem Eindrehen der Widerlagerhülse (1) in eine Längsnut (3) des Profilrohrs (4, 5) nacheinander in einen Nutengrund (15) und zumindest eine Nutflanke (16) der Längsnut (3) einschneiden.

2. Widerlagerhülse nach Anspruch 1,
**dadurch gekennzeichnet, dass**
- an einem Längsende der Widerlagerhülse (1) zumindest ein Werkzeugeingriff (17) vorgesehen ist, der einen Innenmehrkant (18) und/oder einen Freischliff (19) aufweist, und/oder
- dass an einem Längsende der Widerlagerhülse (1) zumindest ein Werkzeugeingriff (17) vorgesehen ist, wobei ein in Umfangsrichtung längster Schneidenkamm (13,13a) direkt benachbart zu dem Werkzeugeingriff (17) angeordnet ist.

3. Widerlagerhülse nach Anspruch 1 oder 2,
**dadurch gekennzeichnet, dass**
an zumindest einem Schneidenkamm (13) an einem in Eindrehrichtung (14) hinteren Ende ein Anschlag (20) angeordnet ist, der eine Eindrehbewegung der Widerlagerhülse (1) begrenzt, wobei der Anschlag (20) als eine sich in Axialrichtung (6) über zumindest zwei Schneidenkämme (13) ausgebildete Anschlagskante ausgebildet sein kann.

4. Widerlagerhülse nach einem der vorhergehenden Ansprüche,
**dadurch gekennzeichnet, dass**
in einer Außenmantelfläche der Widerlagerhülse (1) in Eindrehrichtung (14) vor jedem Schneidenkamm (13) eine Vertiefung (21), insbesondere eine durchgehende Wendelnut (22) oder einzelne Bohrungen (23), zu einer Materialaufnahme vorgesehen ist.

5. Widerlagerhülse nach einem der vorhergehenden Ansprüche,
**dadurch gekennzeichnet, dass**
- die einzelnen Schneidenkämme (13) an ihrem in Eindrehrichtung (14) vorderen Ende um einen Umfangswinkel β von 3° ≤ β ≤ 60°, vorzugsweise um einen Umfangswinkel β von 7°, versetzt zueinander angeordnet sind, und/oder
- dass die einzelnen Schneidenkämme (13) an ihrem in Eindrehrichtung (14) hinteren Ende nicht versetzt zueinander angeordnet sind, das heißt auf einer axialen Geraden liegen.

6. Widerlagerhülse nach einem der vorhergehenden Ansprüche,
**dadurch gekennzeichnet, dass**
der selbstschneidende oder gewindeformende Befestigungsbereich (9) drei über den Umfang verteilte und in Umfangsrichtung voneinander beabstandete Befestigungsabschnitte (10, 11, 12) aufweist.

7. Widerlagerhülse nach einem der vorhergehenden Ansprüche,
**dadurch gekennzeichnet, dass**
zumindest ein Schneidenkamm (13) an seinem in Eindrehrichtung (14) vorderen Ende um einen Spanwinkel γ von ca. 20 ≤ γ ≤ 40°, insbesondere um γ ≈ 30°, zu einer Radialen R nach vorne geneigt ist.

8. Widerlagerhülse nach einem der vorhergehenden Ansprüche,
**dadurch gekennzeichnet, dass**
zumindest ein Schneidkamm (13) im Querschnitt keilförmig ausgebildet ist und eine radiale erste Flanke (24) und eine um 15° ≤ α ≤ 50°, vorzugsweise um α ≈ 30°, dazu geneigte zweite Flanke (25) aufweist.

9. Widerlagerhülse nach einem der vorhergehenden Ansprüche,
**dadurch gekennzeichnet, dass**
die Schneidenkämme (13) ohne Steigung oder mit Steigung, das heißt gewindeartig, ausgerichtet sind.

10. Widerlagerhülse nach einem der vorhergehenden Ansprüche,
**dadurch gekennzeichnet, dass**
die Durchgangsöffnung (7) mit einem Innengewinde (38) zur Aufnahme einer Durchgangsschraube (8) versehen ist.

11. Quickverbinder (26) mit einer Widerlagerhülse (1) nach einem der vorhergehenden Ansprüche, einer die Widerlagerhülse (1) durchgreifenden Verbindungsschraube (8) und einem mit der Verbindungsschraube (8) verschraubtem Nutenstein (27).

12. Querverbindung (2) an einem Profilrohrsystem,
- mit einem ersten Profilrohr (4) mit zumindest einer hinterschnittenen Längsnut (3) und einem rechtwinklig dazu angeordneten zweiten Profilrohr (5) mit zumindest einer hinterschnittenen Längsnut (3),
- mit einem Quickverbinder (26) nach Anspruch 11, dessen Widerlagerhülse (1) in eine hinterschnittene Längsnut (3) des ersten Profilrohrs (4) axial unverschieblich eingedreht ist,
- wobei die Verbindungschraube (8) parallel zu einer Symmetrieachse des ersten Profilrohrs (4) in einer hinterschnittenen Längsnut (3) desselben angeordnet ist,
- wobei die Verbindungsschraube (8) in den in einer hinterschnittenen Längsnut (3) des zweiten Profilrohrs (5) angeordneten Nutenstein (27) eingeschraubt ist, und mit ihrem Kopf (33) die Widerlagerhülse (1) hintergreift.

13. Herstellungsverfahren einer Querverbindung (2) nach Anspruch 12 unter Verwendung einer Steckschlüsselnuss (28), bei dem
- die Verbindungsschraube (8) durch die Widerlagerhülse (1) gesteckt und in den Nutenstein (27) eingeschraubt wird,
- der Nutenstein (27) soweit in eine Ausnehmung (29) der Steckschlüsselnuss (28) eingeschoben wird, bis die beiden parallelen Ränder (30) der Ausnehmung (29) formschlüssig mit, insbesondere dem Freischliff (19), der Widerlagerhülse (1) zusammenwirken,
- die Widerlagerhülse (1) in die Längsnut (3) des ersten Profilrohrs (4) eingeschoben und anschließend verdreht und damit axial unverschieblich darin fixiert wird,
- die Steckschlüsselnuss (28) abgezogen und das zweite Profilrohr (5) derart quer am ersten Profilrohr (4) angeordnet wird, dass der Nutenstein (27) in eine Längsnut (3) am zweiten Profilrohr (5) eingreift,
- die Verbindungsschraube (8) angezogen und damit der Nutenstein (27) in der Längsnut (3) des zweiten Profilrohrs (5) verdreht und die Querverbindung (2) fixiert wird.

## Claims

1. Counter bearing sleeve (1) for a profiled tube (4, 5) having at least one undercut longitudinal groove (3), with a through opening (7) extending in an axial direction (6) for feeding through a connecting screw (8), with an external self-tapping or thread-forming securing region (9), which has at least two securing sections (10, 11, 12) distributed around the circumference and spaced apart from one another in circumferential direction,
**characterized in that**
each securing section (10, 11, 12) has at least two tapping ridges (13) adjacent to one another in axial direction (6) which are offset in the insertion direction (14), so that when the counter bearing sleeve (1) is screwed into a longitudinal groove (3) of the profiled tube (4, 5) the tapping ridges (13) cut successively into a groove base (15) and at least one groove flank (16) of the longitudinal groove (3).

2. Counter bearing sleeve according to claim 1,
**characterized in that**
- at least one tool catch (17) is provided at one longitudinal end of the counter bearing sleeve (1) which tool catch has an internal polygon (18) and/or a free cut (19), and/or
- at least one tool catch (17) is provided at a longitudinal end of the counter bearing sleeve (1), wherein a tapping ridge (13, 13a) which is the longest in circumferential direction is arranged directly adjacent to the tool catch (17).

3. Counter bearing sleeve according to claim 1 or 2,
**characterized in that**
a stop (20) is arranged on at least one tapping ridge (13) at a rear end in the insertion direction (14), which limits an insertion movement of the counter bearing sleeve (1), wherein the stop (20) can be configured as a stop edge formed in axial direction (6) by at least two tapping ridges (13).

4. Counter bearing sleeve according to any one of the preceding claims,
**characterized in that**
a recess (21), in particular a continuous helical groove (22) or individual bores (23), is provided in an outer shell surface of the counter bearing sleeve (1) in insertion direction (14) in front of each tapping ridge (13) for receiving material.

5. Counter bearing sleeve according to any one of the preceding claims,
**characterized in that**
- the individual tapping ridges (13) are arranged offset to one another at their front end in insertion direction (14) by a circumferential angle β of 3° ≤ β ≤ 60°, preferably by a circumferential angle β of 7°, and/or
- the individual tapping ridges (13) are not offset from one another at their rear end in insertion direction (14), i.e. are in an axial straight line.

6. Counter bearing sleeve according to any one of the preceding claims,
**characterized in that**
the self-tapping or thread-forming securing region (9) has three securing sections (10, 11, 12) distributed around the circumference and spaced apart from one another in circumferential direction.

7. Counter bearing sleeve according to any one of the preceding claims,
**characterized in that**
at least one tapping ridge (13) is inclined forwards towards a radial R at its front end in insertion direction (14) by a rake angle γ of approx. 20 ≤ γ ≤ 40°, in particular by γ ≈ 30°.

8. Counter bearing sleeve according to any one of the preceding claims,
**characterized in that**
at least one tapping ridge (13) is configured to be wedge-shaped in cross-section and has a radial first flank (24) and a second flank (25) inclined thereto by 15° ≤ α ≤ 50°, preferably by α ≈ 30°.

9. Counter bearing sleeve according to any one of the preceding claims,
**characterized in that**
the tapping ridges (13) are aligned without pitch or with pitch, i.e. thread-like.

10. Counter bearing sleeve according to any one of the preceding claims,
**characterized in that**
the through opening (7) is provided with an internal thread (38) for receiving a through screw (8).

11. Quick connector (26) with a counter bearing sleeve (1) according to any one of the preceding claims, a connecting screw (8) engaging through the counter bearing sleeve (1) and a sliding block (27) screwed to the connecting screw (8).

12. Cross connection (2) on a profiled tube system,
- with a first profiled tube (4) having at least one undercut longitudinal groove (3) and a second profiled tube (5) arranged at right angles thereto with at least one undercut longitudinal groove (3),
- with a quick connector (26) according to claim 11, the counter bearing sleeve (1) of which is screwed axially non-displaceably into an undercut longitudinal groove (3) of the first profiled tube (4),
- wherein the connecting screw (8) is arranged parallel to an axis of symmetry of the first profiled tube (4) in an undercut longitudinal groove (3) thereof,
- wherein the connecting screw (8) is screwed into the sliding block (27) arranged in an undercut longitudinal groove (3) of the second profiled tube (5) and engages with its head (33) behind the counter bearing sleeve (1).

13. Method for manufacturing a cross connection (2) according to claim 12 using a socket spanner nut (28), in which
- the connecting screw (8) is inserted through the counter bearing sleeve (1) and screwed into the sliding block (27),
- the sliding block (27) is pushed into a recess (29) of the socket spanner nut (28) until the two parallel edges (30) of the recess (29) interact positively with the counter bearing sleeve (1), in particular the free cut (19),
- the counter bearing sleeve (1) is pushed into the longitudinal groove (3) of the first profiled tube (4) and then twisted and thus fixed axially immovably therein,
- the socket spanner nut (28) is removed and the second profiled tube (5) is arranged transversely on the first profiled tube (4) in such a way that the slot nut (27) engages in a longitudinal groove (3) on the second profiled tube (5),
- the connecting screw (8) is tightened and the sliding block (27) is thus rotated in the longitudinal groove (3) of the second profiled tube (5) and the transverse connection (2) is fixed.

## Revendications

1. Manchon de contre-palier (1) pour un tube profilé (4, 5) présentant au moins une rainure longitudinale (3) contre-dépouillée, avec une ouverture traversante (7) s'étendant le long d'un sens axial (6) pour le passage d'une vis de liaison (8), avec une zone de fixation (9) extérieure autotaraudeuse ou formant un filet qui présente au moins deux sections de fixation (10, 11, 12) espacées l'une de l'autre dans le sens périphérique et réparties sur la périphérie,
**caractérisé en ce que**
chaque section de fixation (10, 11, 12) présente au moins deux arêtes de taraudage (13) contiguës dans le sens axial (6) qui sont agencées en déport dans le sens de vissage (14) de sorte que les arêtes de taraudage (13) coupent lors d'un vissage du manchon de contre-palier (1) dans une rainure longitudinale (3) du tube profilé (4, 5) l'une après l'autre un fond de rainure (15) et au moins un flanc de rainure (16) de la rainure longitudinale (3).

2. Manchon de contre-palier selon la revendication 1,
**caractérisé en ce que**
- au moins une prise d'outil (17) est prévue au niveau d'une extrémité longitudinale du manchon de contre-palier (1), prise qui présente un polygone creux (18) et/ou un meulage libre (19), et/ou
- **en ce qu'**au moins une prise d'outil (17) est prévue au niveau d'une extrémité longitudinale du manchon de contre-palier (1), dans lequel une arête de taraudage (13,13a) la plus longue dans le sens périphérique est agencée directement de manière contiguë à la prise d'outil (17).

3. Manchon de contre-palier selon la revendication 1 ou 2,
**caractérisé en ce que**
une butée (20) est agencée au niveau d'au moins une arête de taraudage (13) au niveau d'une extrémité arrière dans le sens de vissage (14), butée qui délimite un mouvement de vissage du manchon de contre-palier (1), dans lequel la butée (20) peut être réalisée comme une arête de butée réalisée dans le sens axial (6) au-dessus d'au moins deux arêtes de taraudage (13).

4. Manchon de contre-palier selon l'une quelconque des revendications précédentes,
**caractérisé en ce que**
dans une surface enveloppe extérieure du manchon de contre-palier (1) dans le sens de vissage (14) avant chaque arête de taraudage (13), une cavité (21), en particulier une rainure hélicoïdale (22) continue ou des perçages (23) individuels, est prévue pour un logement de matériau.

5. Manchon de contre-palier selon l'une quelconque des revendications précédentes,
**caractérisé en ce que**
- les arêtes de taraudage (13) individuelles sont agencées au niveau de leur extrémité avant dans le sens de vissage (14) en déport l'une de l'autre d'un angle périphérique β de 3° ≤ β ≤ 60°, de préférence d'un angle périphérique β de 7°, et/ou
- **en ce que** les arêtes de taraudage (13) individuelles ne sont pas agencées en déport l'une de l'autre au niveau de leur extrémité arrière dans le sens de vissage (14), c'est-à-dire se trouvent sur une droite axiale.

6. Manchon de contre-palier selon l'une quelconque des revendications précédentes,
**caractérisé en ce que**
la zone de fixation (9) autotaraudeuse ou formant un filet présente trois sections de fixation (10, 11, 12) espacées les unes des autres dans le sens périphérique et réparties sur la périphérie.

7. Manchon de contre-palier selon l'une quelconque des revendications précédentes,
**caractérisé en ce que**
au moins une arête de taraudage (13) est inclinée au niveau de son extrémité avant dans le sens de vissage (14) d'un angle de coupe γ d'environ 20 ≤ γ ≤ 40°, en particulier de γ ≈ 30°, par rapport à une radiale R vers l'avant.

8. Manchon de contre-palier selon l'une quelconque des revendications précédentes,
**caractérisé en ce que**
au moins une arête de taraudage (13) est réalisée en section transversale en forme de coin et présente un premier flanc radial (24) et un second flanc (25) incliné de 15° ≤ α ≤ 50°, de préférence de α ≈ 30°, par rapport à celui-ci.

9. Manchon de contre-palier selon l'une quelconque des revendications précédentes,
**caractérisé en ce que**
les arêtes de taraudage (13) sont orientées sans pente ou avec pente, c'est-à-dire comme un filetage.

10. Manchon de contre-palier selon l'une quelconque des revendications précédentes,
**caractérisé en ce que**
l'ouverture traversante (7) est pourvue d'un filet intérieur (38) pour le logement d'une vis traversante (8).

11. Connecteur rapide (26) avec un manchon de contre-palier (1) selon l'une quelconque des revendications précédentes, une vis de liaison (8) pénétrant le manchon de contre-palier (1) et un coulisseau (27) vissé avec la vis de liaison (8).

12. Liaison transversale (2) au niveau d'un système de tube profilé,
- avec un premier tube profilé (4) avec au moins une rainure longitudinale (3) contre-dépouillée et un second tube profilé (5) agencé à angle droit par rapport à celui-ci avec au moins une rainure longitudinale (3) contre-dépouillée,
- avec un connecteur rapide (26) selon la revendication 11, dont le manchon de contre-palier (1) est vissé dans une rainure longitudinale (3) contre-dépouillée du premier tube profilé (4) de manière axialement immobile,
- dans laquelle la vis de liaison (8) est agencée parallèlement à un axe de symétrie du premier tube profilé (4) dans une rainure longitudinale (3) contre-dépouillée de celui-ci,
- dans laquelle la vis de liaison (8) est vissée dans le coulisseau (27) agencé dans une rainure longitudinale (3) contre-dépouillée du second tube profilé (5), et avec sa tête (33) vient en prise derrière le manchon de contre-palier (1).

13. Procédé de fabrication d'une liaison transversale (2) selon la revendication 12 en utilisant un fouillot de clé à douille (28), pour lequel
- la vis de liaison (8) est enfichée par le manchon de contre-palier (1) et est vissée dans le coulisseau (27),
- le coulisseau (27) est enfoncé dans un évidement (29) du fouillot de clé à douille (28) jusqu'à ce que les deux bords (30) parallèles de l'évidement (29) coagissent par complémentarité de formes avec, en particulier le meulage libre (19), du manchon de contre-palier (1),
- le manchon de contre-palier (1) est enfoncé dans la rainure longitudinale (3) du premier tube profilé (4) et tourné ensuite et fixé dedans ainsi de manière axialement immobile,
- le fouillot de clé à douille (28) est retiré et le second tube profilé (5) est agencé transversalement au niveau du premier tube profilé (4) de telle manière que le coulisseau (27) s'engage dans une rainure longitudinale (3) au niveau du second tube profilé (5),
- la vis de liaison (8) est serrée et ainsi le coulisseau (27) est tourné dans la rainure longitudinale (3) du second tube profilé (5) et la liaison transversale (2) est fixée.
